# EUROPEAN PATENT APPLICATION

(11) **EP 3 533 735 A1**
(43) Date of publication of application: **04.09.2019**
(21) Application number: 18275146.1
(22) Date of filing: 19.09.2018
(51) Int. Cl.: B65G 45/18, B65G 45/26

(54) **CLEANING APPARATUS FOR CLEANING A RAIL SYSTEM**

(30) Priority: 02.03.2018 GB 201803442
(71) Applicant: Kannegiesser UK Limited, Banbury, Oxfordshire OX16 1QZ (GB)
(72) Inventor: Bahou, Adam, Banbury, Oxfordshire OX16 1QZ (GB)
(74) Representative: Potter Clarkson

(57) **Abstract**

There is provided a cleaning apparatus (20) for cleaning a rail system. The cleaning apparatus (20) comprises a plurality of cleaning devices (30,32), each cleaning device (30,32) including a respective support member (38,40) configured for engaging a rail (22) so that the respective cleaning device (30,32) is transportable along the rail (22), each cleaning device (30,32) including a respective cleaning member for cleaning a rail (22), wherein each cleaning device (30,32) is arranged to be movable between first and second positions to switch between first and second modes of the cleaning apparatus (20) so that:
in the first mode of the cleaning apparatus (20), the cleaning devices (30,32) are arranged in their respective first positions to align the respective support members (38,40) for engaging a common rail (22) so that the cleaning devices (30,32) are transportable along the common rail (22), and
in the second mode of the cleaning apparatus (20), the cleaning devices (30,32) are arranged in their respective second positions to align the respective support members (38,40) for respective engagement with separate rails so that the cleaning devices (30,32) are respectively transportable along the separate rails.

## Description

This invention relates to a cleaning apparatus for cleaning a rail system.

It is known to use a rail (also known as a track) to transport objects from one location to another. For example, laundry bags may be transported along an overhead rail from one station to another station in commercial laundry systems.

According to a first aspect of the invention, there is provided a cleaning apparatus for cleaning a rail system, the cleaning apparatus comprising a plurality of cleaning devices, each cleaning device including a respective support member configured for engaging a rail so that the respective cleaning device is transportable along the rail, each cleaning device including a respective cleaning member for cleaning a rail, wherein each cleaning device is arranged to be movable between first and second positions to switch between first and second modes of the cleaning apparatus so that:
in the first mode of the cleaning apparatus, the cleaning devices are arranged in their respective first positions to align the respective support members for engaging a common rail so that the cleaning devices are transportable along the common rail, and
in the second mode of the cleaning apparatus, the cleaning devices are arranged in their respective second positions to align the respective support members for respective engagement with separate rails so that the cleaning devices are respectively transportable along the separate rails.

The above configuration of the cleaning devices provides a cleaning apparatus which can be adapted for use with both single-rail and multiple-rail systems. This beneficially provides cost savings for a user, who would otherwise be required to rely on the use of multiple conventional single-rail cleaning apparatus, each of which is designed to clean a single rail. Furthermore, using the same cleaning apparatus with both single-rail and multiple-rail systems also reduces the overall time spent in, for example, cleaning the rail systems, and apparatus maintenance and repair.

The invention is particularly advantageous for use with a rail system having both single-rail and multiple-rail sections in which an object (e.g. a laundry bag) may be transported from the single-rail section to the multiple-rail section and/or from the multiple-rail section to the single-rail section. A conventional single-rail cleaning apparatus is incapable of travelling along, and thereby cleaning, the separate rails of the multiple-rail section. On the other hand, the cleaning apparatus of the invention is readily switchable between its first and second modes in order to freely travel along, and thereby clean, both the single-rail and multiple-rail sections. Furthermore, it is more efficient to use the cleaning apparatus of the invention, instead of setting up multiple conventional single-rail cleaning apparatus, to clean the single-rail and multiple rail sections, particularly when other objects are being transported along the rail system.

It will be appreciated that the invention is applicable to cleaning apparatus including two or more cleaning devices.

Each cleaning device of the cleaning apparatus of the invention may be configured for suspension from an overhead rail. For example, each support member may be a suspension member configured for suspension from a rail so that the respective cleaning device is transportable along the rail, and each cleaning device may be arranged to be movable between the first and second positions to switch between the first and second modes of the cleaning apparatus so that:
in the first mode of the cleaning apparatus, the cleaning devices are arranged in their respective first positions to align the respective suspension members for suspension from a common rail so that the cleaning devices are transportable along the common rail, and
in the second mode of the cleaning apparatus, the cleaning devices are arranged in their respective second positions to align the respective suspension members for respective suspension from separate rails so that the cleaning devices are respectively transportable along the separate rails.

Each cleaning device of the cleaning apparatus of the invention may be configured for mounting on a rail. For example, each support member may be a mounting member configured for mounting on a rail so that the respective cleaning device is transportable along the rail, and each cleaning device may be arranged to be movable between the first and second positions to switch between the first and second modes of the cleaning apparatus so that:
in the first mode of the cleaning apparatus, the cleaning devices are arranged in their respective first positions to align the respective mounting members for mounting on a common rail so that the cleaning devices are transportable along the common rail, and
in the second mode of the cleaning apparatus, the cleaning devices are arranged in their respective second positions to align the respective mounting members for respective mounting on separate rails so that the cleaning devices are respectively transportable along the separate rails.

In a preferred first mode of the cleaning apparatus, the cleaning devices may be arranged in their respective first positions to align the respective support members in a single line for engaging the common rail so that the cleaning devices are transportable in the single line along the common rail. Aligning the support members to be arranged in this manner makes it easier to transport the cleaning devices along the common rail.

In a preferred second mode of the cleaning apparatus, the cleaning devices may be arranged in their respective second positions to align the respective support members for respective engagement with separate, parallel rails so that the cleaning devices are respectively transportable along the separate, parallel rails. Aligning the support members in this manner makes it easier to transport the cleaning devices respectively along the separate, parallel rails.

In embodiments of the invention, the cleaning members of the cleaning devices may be arranged so that, in the first mode of the cleaning apparatus, the cleaning members are configured for cleaning opposite sides of the common rail. This ensures that the common rail is cleaned thoroughly.

In further embodiments of the invention, the cleaning apparatus may include an apparatus body, wherein each cleaning device may be arranged to be movable relative to the apparatus body between the first and second positions to switch between the first and second modes of the cleaning apparatus. The apparatus body may be used to support one or more additional components and thereby provides a reliable means for including the or each additional component in the electrical apparatus.

In a preferred embodiment of the invention, each cleaning device may be arranged to be pivotable between the first and second positions to switch between the first and second modes of the cleaning apparatus. This provides an exemplary way of aligning the support members for engaging the common rail and the separate rails.

An exemplary way of arranging each cleaning device to be pivotable between the first and second positions is to configure each cleaning device to include a respective flexible coupling member arranged to pivotally couple the respective cleaning device to the apparatus body. The use of flexible coupling members not only enables the cleaning apparatus to readily accommodate different arrangements of separate rails, but also provides a degree of slack which reduces the risk of the cleaning apparatus being rendered immobile while engaging the rail(s).

Further optional features of the cleaning apparatus are described as follows.

Each support member may be made from a combination of at least one metallic component and at least one plastic component. This results in a lightweight and robust support member.

Each support member may include a respective support element for engaging a rail. This helps to maintain the engagement of the support members with the rail(s).

Each support element may be a rotary support element, such as a support wheel. This makes it easier for the cleaning devices to move along the rail(s).

The cleaning apparatus may include one or more load-bearing support members configured for engaging a rail so as to support the cleaning apparatus, wherein the or each load-bearing support member may be separate from each cleaning device.

The cleaning apparatus may include a proximity sensor and a proximity target. The proximity target may be configured to be movable into and out of a sensing range of the proximity sensor. The proximity target may be arranged so that, when the cleaning apparatus is transported along a rail, a rate of movement of the proximity target into and out of the sensing range of the proximity sensor corresponds to a speed at which the cleaning apparatus is transported along the rail. The proximity sensor may be an inductive proximity sensor.

The use of the proximity sensor in the cleaning apparatus not only enables highly accurate measurement of the speed at which the cleaning apparatus is transported along the rail, but also allow for a more compact configuration of the cleaning apparatus in comparison to other types of sensors such as accelerometers and gyroscopes.

The proximity target may be mounted on a rotary element which is configured for engaging a rail. This enables measurement of a rotational speed of the rotary element, which can be used to determine the speed at which the cleaning apparatus is transported along the rail.

The cleaning apparatus may further include a controller configured to receive a proximity measurement from the proximity sensor, wherein the controller may be configured to selectively control a cleaning operation of each cleaning member in accordance with the received proximity measurement. The provision of such a controller enables the automatic control of the cleaning operation of each cleaning member in response to the speed at which the cleaning apparatus is transported along the rail.

At least one of the plurality of support members may include a proximity sensor and a proximity target. Such a support member may refer to the support member of the cleaning device of the cleaning apparatus of the invention, or may refer to the load-bearing support member of the cleaning apparatus of the invention.

Each cleaning device may include a respective motor configured to selectively drive the corresponding cleaning member to perform a cleaning function. This results in more efficient cleaning of the rail(s). In such embodiments, each motor may be a flat motor, which beneficially provides reductions in the size and weight of the cleaning devices. It will be appreciated that other types of motors, such as brushless or brushed motors, may be used to selectively drive the corresponding cleaning member to perform a cleaning function.

Each cleaning member may be a rotary cleaning member. This makes it easier for the cleaning members to clean the rail(s) while moving along the rail(s).

The motors may be configured to selectively rotate the rotary cleaning members in a common rotational direction and/or in opposite rotational directions, depending on the cleaning requirements of the rail(s).

In embodiments of the invention, the cleaning apparatus may include a vacuum cleaning system configured to selectively extract lint, dust, dirt and/or debris from the vicinity of the cleaning apparatus. This prevents the lint, dust, dirt and/or debris from not only resettling on the rail(s) but also spreading to the wider environment.

The vacuum cleaning system may include a plurality of conduits. Each conduit may be coupled to a respective one of the support members to allow the vacuum cleaning system to, via the conduit, selectively extract lint, dust, dirt and/or debris from the vicinity of the corresponding support member. This provides a reliable means of immediately extracting the lint, dust, dirt and/or debris from the vicinity of the cleaning devices before they are spread to the wider environment.

The cleaning apparatus may further include a controller configured to receive a proximity measurement from the proximity sensor, wherein the controller may be configured to selectively control a vacuuming operation of the vacuum cleaning system in accordance with the received proximity measurement. The provision of such a controller enables the automatic control of the vacuuming operation of the vacuum cleaning system in response to the speed at which the cleaning apparatus is transported along the rail.

In further embodiments of the invention, the cleaning apparatus may include a pressure sensor configured to selectively monitor a pressure level in the vacuum cleaning system. This provides an automatic way of checking whether the vacuum cleaning system is working properly or requires maintenance, such as emptying a collection container, cleaning a filter, or replacing the filter.

In still further embodiments of the invention, each cleaning device may include a respective deflector member arranged to, in use, deflect lint, dust, dirt and/or debris removed from a rail. The provision of the deflector member in each cleaning device provides control over the dispersion of the removed lint, dust, dirt and/or debris to the wider environment. For example, in embodiments of the invention employing the use of the vacuum cleaning system, each deflector member may be arranged to, in use, deflect the removed lint, dust, dirt and/or debris towards the vacuum cleaning system.

Optionally each deflector member may be flexible. This allows each deflector member to be located closer to the rail(s) without significantly impeding the transportation of the cleaning devices along the rail(s).

Further optionally each deflector member may be rigid. This allows each deflector member to provide a more controlled deflection of the lint, dust, dirt and/or debris removed from a rail.

Optionally the cleaning apparatus may include one or more portable energy storage devices for powering one or more electrical components of the cleaning apparatus. In such embodiments, the or each energy storage device may include a battery. The use of the or each portable energy storage device removes the need for wired connection to supply power to the cleaning apparatus which would result in an unduly complex design of the cleaning apparatus. In addition, the weight of the cleaning apparatus can be optionally reduced through use of lightweight battery technology.

According to a second aspect of the invention, there is provided a cleaning apparatus for cleaning a rail system, the cleaning apparatus comprising a cleaning device, the cleaning device including a support member configured for engaging a rail so that the cleaning device is transportable along the rail, the cleaning device including a cleaning member for cleaning a rail, wherein the cleaning apparatus includes a proximity sensor and a proximity target, the proximity target is configured to be movable into and out of a sensing range of the proximity sensor, and the proximity target is arranged so that, when the cleaning apparatus is transported along a rail, a rate of movement of the proximity target into and out of the sensing range of the proximity sensor corresponds to a speed at which the cleaning apparatus is transported along the rail.

In the second aspect of the invention, the proximity sensor may be an inductive proximity sensor.

In the second aspect of the invention, the proximity target may be mounted on a rotary element which is configured for engaging a rail.

In the second aspect of the invention, the cleaning apparatus may further include a controller configured to receive a proximity measurement from the proximity sensor, wherein the controller may be configured to selectively control a cleaning operation of the cleaning member in accordance with the received proximity measurement.

In the second aspect of the invention, the cleaning apparatus may further include a vacuum cleaning system configured to selectively extract lint, dust, dirt and/or debris from the vicinity of the cleaning apparatus, wherein the cleaning apparatus may further include a controller configured to receive a proximity measurement from the proximity sensor, and the controller may be configured to selectively control a vacuuming operation of the vacuum cleaning system in accordance with the received proximity measurement.

In the second aspect of the invention, the cleaning apparatus may include one or more load-bearing support members configured for engaging a rail so as to support the cleaning apparatus, wherein the or each load-bearing support member is separate from the cleaning device.

In the second aspect of the invention, at least one of the plurality of support members may include a proximity sensor and a proximity target. Such a support member may refer to the support member of the cleaning device of the cleaning apparatus of the invention, or may refer to the load-bearing support member of the cleaning apparatus of the invention.

The aforementioned technical benefits associated with the proximity sensors and proximity targets of the first aspect of the invention and its embodiments apply mutatis mutandis to the proximity sensor and proximity target of the embodiments of the second aspect of the invention and its embodiments.

A preferred embodiment of the invention will now be described, by way of a non-limiting example, with reference to the accompanying drawings in which:
Figure 1 shows schematically a side view of a cleaning apparatus according to an embodiment of the invention;
Figures 2a and 2b show schematically a top view of the cleaning apparatus of Figure 1 in different modes;
Figure 3 shows schematically a front view of the cleaning apparatus of Figure 1;
Figures 4a, 4b and 4c show schematically a structure of a cleaning trolley of the cleaning apparatus of Figures 1 to 3; and
Figures 5a, 5b, 5c, 5d and 5e show schematically a structure of an alternative cleaning trolley of the cleaning apparatus of Figures 1 to 3.

The figures are not necessarily to scale, and certain features and certain views of the figures may be shown exaggerated in scale or in schematic form in the interests of clarity and conciseness.

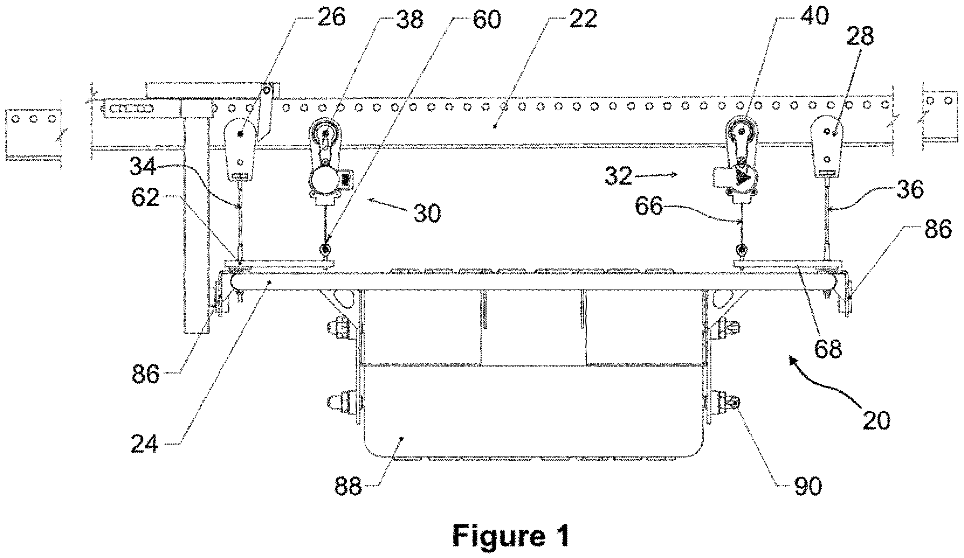

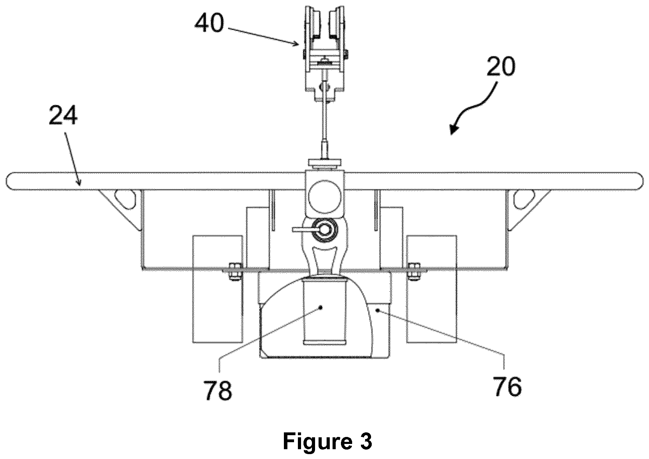

A cleaning apparatus according to an embodiment of the invention is shown in Figures 1 to 3 and is designated generally by the reference numeral 20.

The cleaning apparatus 20 is for cleaning both a single overhead rail section and a multiple overhead rail section of a rail system (e.g. for a commercial laundry system). The single overhead rail section and the multiple overhead rail section are arranged such that an object (e.g. a laundry bag) may be transported from the single-rail section to the multiple-rail section and/or from the multiple-rail section to the single-rail section. For the purposes of illustrating how the cleaning apparatus works, each overhead rail 22,72 has an upside-down T cross-sectional profile. It will be appreciated that the cleaning apparatus 20 can be used with other overhead rails having different cross-sectional profiles.

The cleaning apparatus 20 comprises a chassis 24, first and second load-bearing support trolleys 26,28, and first and second cleaning devices 30,32.

Each load-bearing support trolley 26,28 includes support wheels (not shown) which in use engage an overhead rail 22,72 so as to suspend the respective load-bearing support trolley 26,28 from the overhead rail(s) 22,72. The first and second load-bearing support trolleys 26,28 are respectively connected via flexible steel linkages 34,36 to the front and rear of the chassis 24. In this manner, the load-bearing support trolleys 26,28 act to support the weight of the cleaning apparatus 20 when it is suspended from the overhead rail(s) 22,72.

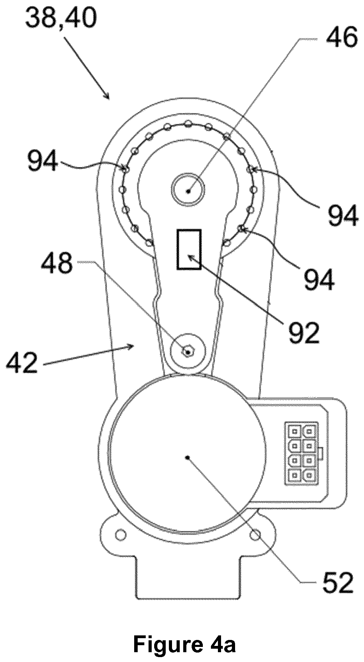

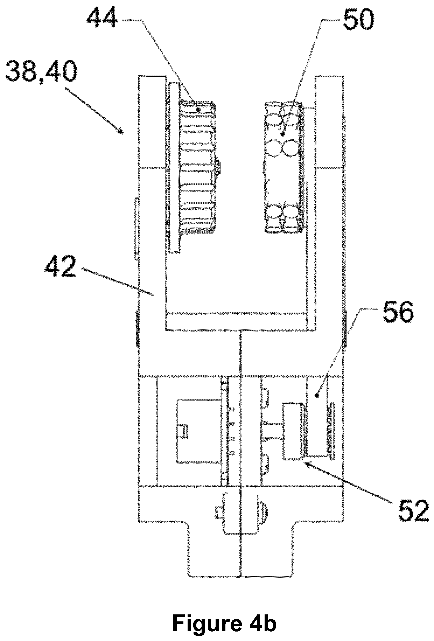

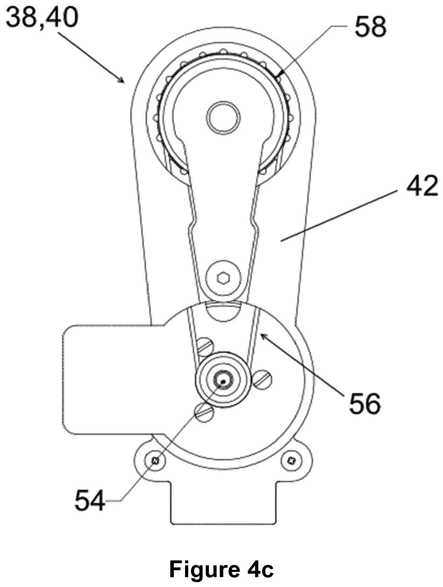

The first cleaning device 30 includes a first suspension member in the form of a first cleaning trolley 38, and the second cleaning device 30,32 includes a second suspension member in the form of a second cleaning trolley 40. Each cleaning trolley 38,40 includes a trolley body 42 which may be made from metal and plastic components, preferably manufactured using an additive manufacturing printer or 3-D printing printer. Figures 4a, 4b and 4c show schematically the structure of a cleaning trolley 38,40.

It is envisaged that, in other embodiments of the invention, each cleaning trolley 38,40 may be configured to have a trolley body which is different in structure, size and/or shape from the trolley body 42 shown in the figures.

Each cleaning trolley 38,40 includes a support wheel 44 which is mounted on an axle 46 on the trolley body 42. A vertical position of the axle 46 can be separately adjusted using a second axle 48. In use, the support wheel 44 of each cleaning trolley 38,40 engages an overhead rail 22,72 so as to suspend the respective cleaning trolley 38,40 from the overhead rail(s) 22,72.

Each cleaning device 30,32 includes a rotary cleaning brush 50 mounted on the trolley body 42 of the respective cleaning trolley 38,40. In the embodiment shown in Figure 4b, the rotary cleaning brush 50 is mounted opposite the support wheel 44 on the trolley body 42 such that the rotary cleaning brush 50 and the support wheel 44 are coaxial.

Each cleaning device 30,32 includes a brushless flat DC motor 52, which is housed within the trolley body 42 of the respective cleaning trolley 38,40 to minimise footprint. In each cleaning device 30,32, the motor 52 drives a first pulley 54 coupled via a timing belt 56 to a second, larger pulley 58 which in turn drives the rotary cleaning brush 50 to perform a brushing function. The combination of pulleys 54,58 can be designed to provide a desired speed reduction. It is envisaged that, in other embodiments of the invention, the pulleys may be of the same size.

In the single overhead rail section and multiple overhead rail section of the rail system, each overhead rail 22,72 is preferably inclined so as to allow the cleaning apparatus 20 to be transported along the overhead rail(s) 22,72 by way of gravity to reduce energy consumption.

Each cleaning device 30,32 is pivotally connected to the chassis 24. More specifically, the first cleaning trolley 38 is connected via a flexible steel linkage 60 to a bearing plate 62 and bearing pivotally mounted on the front of the chassis 24 so as to permit rotary movement 64 of the first cleaning trolley 38 about the axis of the first load-bearing support trolley 26, and the second cleaning trolley 40 is connected via another flexible steel linkage 66 to another bearing plate 68 and bearing pivotally mounted on the rear of the chassis 24 so as to permit rotary movement 70 of the second cleaning trolley 40 about the axis of the second load-bearing support trolley 32.

The above pivotal connection between each cleaning device 30,32 and the chassis 24 permits each cleaning device 30,32 to pivot between first and second positions to switch between first and second modes of the cleaning apparatus 20.

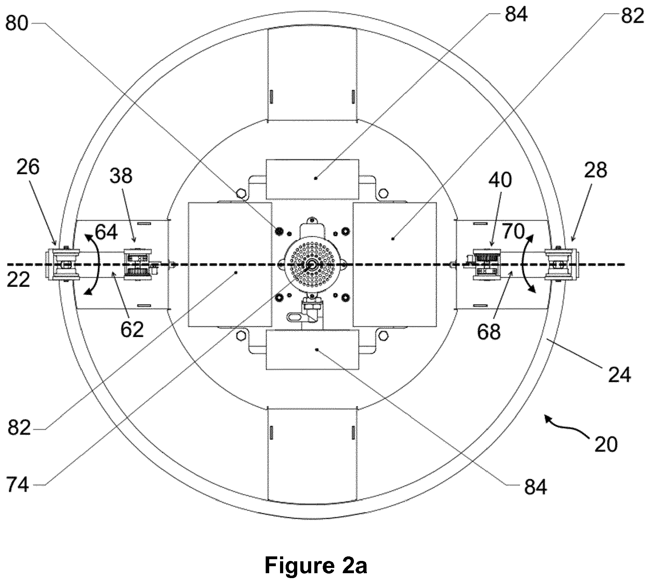

In the first mode of the cleaning apparatus 20 as shown in Figure 2a, the cleaning devices 30,32 are arranged in their respective first positions to align the respective cleaning trolleys 38,40 in a single line, i.e. in tandem, to enable the cleaning trolleys 38,40 to engage a common overhead rail 22 of the single overhead rail section, so that the cleaning devices 30,32 may be transported in tandem along the common overhead rail 22. The load-bearing support trolleys 26,28 are pivotable via the respective flexible linkages 34,36 to be aligned with the cleaning trolleys 38,40 in the single line, so that the load-bearing support trolleys 26,28 and cleaning devices 30,32 may be transported in a single line (i.e. in single file) along the common overhead rail 22.

The first and second cleaning trolleys 38,40 are designed to be mirror images of each other such that, in the first mode of the cleaning apparatus 20, the rotary cleaning brushes 50 of the first and second cleaning trolleys 38,40 are arranged to engage and clean opposite sides of the common overhead rail 22. To synchronise the brushing functions of the rotary cleaning brushes 50, the motors 52 drive the rotary cleaning brushes 50 to rotate in opposite rotational directions. Additionally or alternatively, the motors 52 may be configured to drive the rotary cleaning brushes 50 to rotate in a common rotational direction.

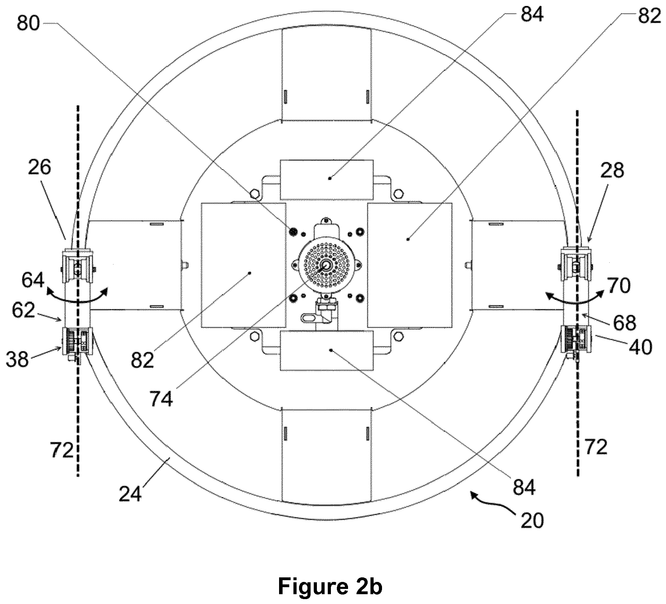

In the second mode of the cleaning apparatus 20 as shown in Figure 2b, the cleaning devices 30,32 are arranged in their respective second positions to align the respective cleaning trolleys 38,40 to enable the cleaning trolleys 38,40 to respectively engage a pair of separate, parallel overhead rails 72 of the multiple overhead rail section, so that the cleaning devices 30,32 may be respectively transported at the same time along the separate, parallel overhead rails 72. The load-bearing support trolleys 26,28 are pivotable via the respective flexible linkages 34,36 to align the first load-bearing support trolley 26 in tandem with the first cleaning trolley 38 and to align the second load-bearing support trolley 28 in tandem with the second cleaning trolley 40, so that the first load-bearing support trolley 26 and first cleaning device 30 may be transported in tandem along one of the separate, parallel overhead rails 72 while the second load-bearing support trolley 28 and second cleaning device 32 may be transported in tandem along the other of the separate, parallel overhead rails 72.

By way of pivotal movement of each cleaning device 30,32 between its first and second positions, the cleaning apparatus 20 can be readily adapted for cleaning both single overhead rail and multiple overhead rail sections of the rail system. As mentioned above, this configuration of the cleaning apparatus 20 not only advantageously provides cost and time savings when compared to the conventional single-rail cleaning apparatus, but also is capable of travelling along, and thereby cleaning, the separate rails of the multiple-rail section, unlike the conventional single-rail cleaning apparatus.

The cleaning apparatus 20 further includes a vacuum cleaning system arranged in the chassis 24. The vacuum cleaning system includes an impeller 74, a brushed DC motor (not shown), a container 76 and a filter 78. The impeller 74 and brushed DC motor are housed within an additive manufacturing or 3-D printed protective enclosure. A plurality of inlets 80 is formed around the protective enclosure, where each inlet 80 provides access to the container 76. In use, the impeller 74 and DC motor operate in combination to remove air from the container 76 via the filter 78, and in doing so creates a negative pressure in the container 76 which causes air in the vicinity of the cleaning apparatus 20 to be sucked into the container 76 via the inlets 80. The plurality of inlets 80 are arranged at strategic positions around the chassis 24 in order to ensure that the vacuum cleaning system provides sufficient coverage about the vicinity of the cleaning apparatus 20. Thus, any lint, dust, dirt and/or debris removed by the rotary cleaning brushes 50 from the overhead rail(s) 22,72 may be extracted by the vacuum cleaning system from the vicinity of the cleaning apparatus 20.

Optionally one or more hoses (not shown) may be attached to the plurality of inlets 80 in order to provide a more controlled extraction of any lint, dust, dirt and/or debris from the vicinity of the cleaning apparatus 20.

The cleaning apparatus 20 also includes a differential pressure sensor (not shown) configured to selectively monitor a pressure level in the container 76. This enables the vacuum cleaning system to automatically detect a change in pressure differential which may warrant emptying of the container 76 or cleaning/replacement of the filter 78.

Each cleaner trolley 38,40 includes a respective deflector member (not shown) constructed from flexible brush strip in order to deflect any lint, dust, dirt and/or debris removed from the overhead rail(s) 22,72 towards the inlets 80 (or the or each hose) of the vacuum cleaning system. Alternatively each deflector member may be constructed from a plastic or rubber material, preferably using an additive manufacturing or 3-D printing printer.

The cleaning apparatus 20 includes an on-board control unit 82 for controlling the flat DC motors 52 and the components of the vacuum cleaning system, and for receiving pressure measurements from the differential pressure sensor. The on-board control unit 82 may be pre-programmed so as to be an autonomous control unit. Alternatively the on-board control unit 82 may be configured to be in wireless communication with a remote control unit so to enable the remote control of the cleaning apparatus 20 by the remote control unit and the transmission of the pressure measurements to the remote control unit.

The cleaning apparatus 20 includes batteries 84 mounted on the chassis. In use, the batteries 84 supply power to the flat DC motors 52, the components of the vacuum cleaning system, and the on-board control unit 82.

Bumpers 86 are fitted to the front and rear of the chassis to reduce impact when colliding with other objects, such as laundry bags. The cleaning apparatus 20 further includes a vacuum-formed plastic cover 88, with latching mechanisms 90 for attachment and removal, for housing internal components of the cleaning apparatus 20 to protect the internal components from dust and moisture.

Each cleaning device 30,32 further includes an inductive proximity sensor 92 and a plurality of inductive proximity targets 94. Each inductive proximity target 94 is in the form of a metal pin. In each cleaning device 30,32, the inductive proximity sensor 92 is mounted in the trolley body 42, while the plurality of inductive proximity targets 94 are arranged to be spaced apart from each other around the circumference of the support wheel 44.

As each cleaning device 30,32 travels along the rail(s) 22,72, each support wheel 44 rotates at a speed proportional to a linear speed of the respective cleaning device 30,32 along the rail(s) 22,72. Rotation of each support wheel 44 causes each inductive proximity target 44 to move into and out of a sensing range of the respective inductive proximity sensor 92. This enables each inductive proximity sensor 92 to detect the rotations of the respective support wheel 44.

The on-board control unit 92 is configured to receive the rotation measurements from the inductive proximity sensors 92, and use an algorithm to derive the rotational speed of each support wheel 44 and thereby derive the linear speed of the respective cleaning device 30,32 along the rail(s) 22,72. The linear speed of the respective cleaning device 30,32 along the rail(s) 22,72 can be used by the on-board control unit 92 to determine the state of motion (i.e. stationary or moving) of the cleaning apparatus 20 in order to decide whether to start, continue or stop the cleaning operation of the rotary cleaning brushes 50 and/or the vacuuming operation of the vacuum cleaning system.

It will be appreciated that, in place of or in addition to the inductive proximity sensors, the speed of travel of the cleaning apparatus 20 along the rail(s) 22,72 may be measured using other types of sensors, such as other types of proximity sensors, accelerometers and gyroscopes.

It is envisaged that, in other embodiments of the invention, the inductive proximity sensors 92 and inductive proximity targets 94 may be omitted.

It is envisaged that, in further other embodiments of the invention, the inductive proximity sensors 92 and inductive proximity targets 94 may be implemented in only one of the cleaning devices 30, 32. It is also envisaged that, in still other embodiments of the invention, the inductive proximity sensors 92 and inductive proximity targets 94 may be implemented mutatis mutandis in one or more of the load-bearing support trolleys.

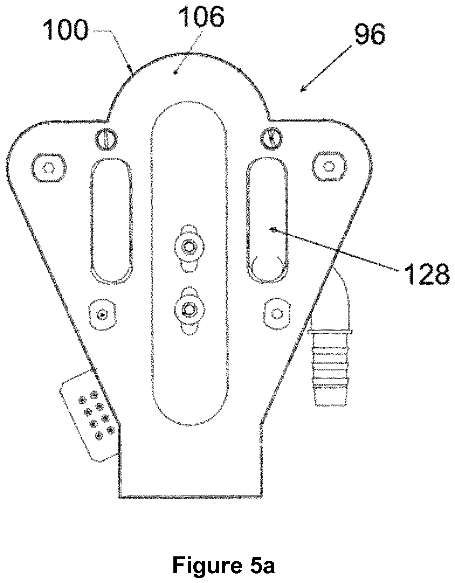

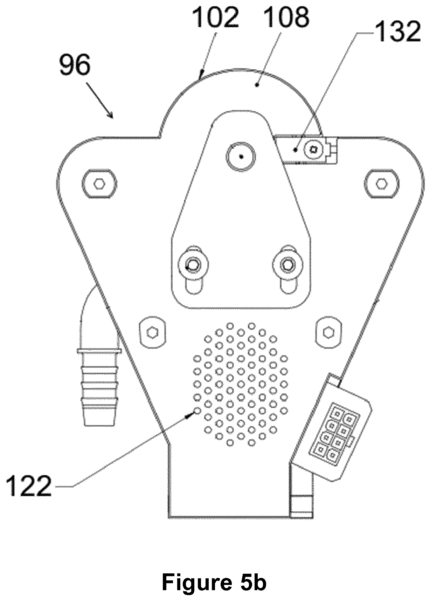

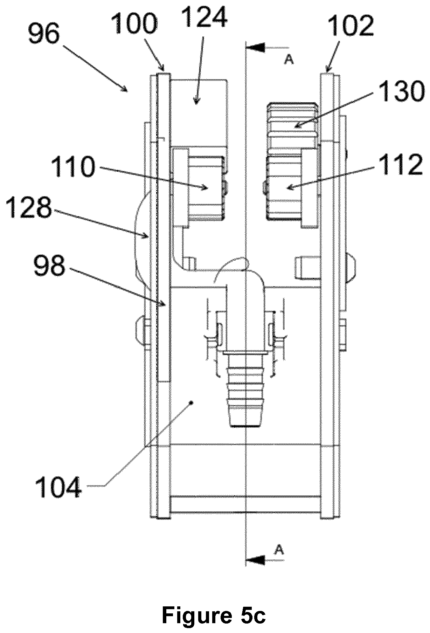

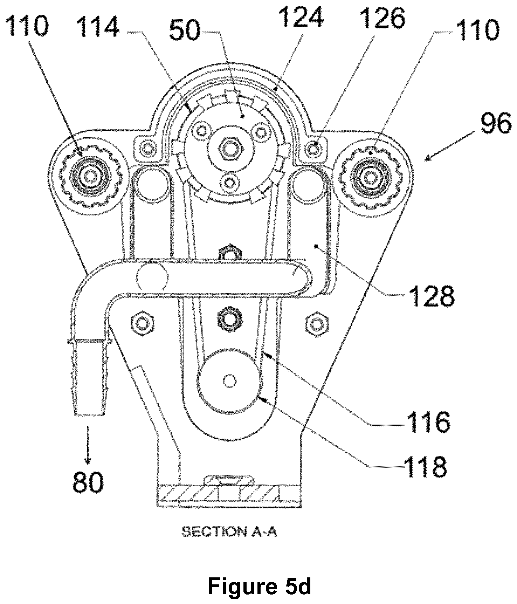

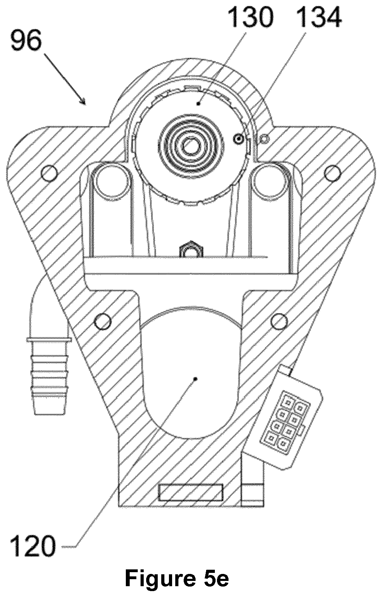

Figures 5a to 5e show schematically an alternative cleaning trolley 96, which may replace either or both of the cleaning trolleys 38,40 in the cleaning apparatus 20. Figure 5a shows a left side view of the cleaning trolley 96, Figure 5b shows a right side view of the cleaning trolley 96, Figure 5c shows a front view of the cleaning trolley 96, and Figures 5d and 5e show cross-sectional views of the cleaning trolley 96.

The cleaning trolley 96 is similar in structure and operation to each of the cleaning trolleys 38,40 but differs from each of the cleaning trolleys 38,40 as follows.

The trolley body 98 of the cleaning trolley 96 comprises two support plates 100, 102 sandwiching a motor housing 104, which is preferably manufactured using an additive manufacturing or 3-D printing printer. Cover plates 106,108 are respectively attached onto the support plates 100,102 to help contain any lint, dust, dirt and/or debris removed from the overhead rail(s) 22,72, the cover plates 106,108 being removeable during maintenance, and to also aid assembly of wheel axles with the trolley body 98.

The cleaning trolley 96 includes a first pair of support wheels 110 and a second pair of support wheels 112. The first pair of support wheels 110 is mounted onto axles on a first of the support plates 100. The second pair of support wheels 112 is mounted onto axles on a second of the support plates 102. The first and second pairs of support wheels 110,112 are arranged opposite each other such that, in use, the first and second pairs of support wheels 110,112 engage opposite sides of the overhead rail(s) 22,72 so as to suspend the cleaning trolley 96 from the overhead rail(s) 22,72. Each support wheel 110,112 includes bearings.

A rotary cleaning brush 50 is centrally mounted on the first support plate 100 between the two support wheels 110. More specifically, the rotary cleaning brush 50 is mounted onto a pulley 114 which is configured to rotate freely about an axle. A vertical position of the axle can be separately adjusted using fasteners. The pulley 114 is coupled via a timing belt 116 to another smaller pulley 118 which is driven by a flat DC motor 120. The ratio between the two pulleys 114,118 is defined to provide a desired speed reduction in order to control a rotational speed of the rotary cleaning brush 50 at an acceptable level for efficient cleaning. The flat DC motor 120 is housed within the motor housing 104 and is protected by one of the cover plates 102, which includes vent holes 122 to provide the flat DC motor 120 with cooling by way of air circulation.

A substantially semi-circular deflector member 124 is positioned above the rotary cleaning brush 50 in order to limit the dispersion of any lint, dust, dirt and/or debris removed by the rotary cleaning brush 50 from the overhead rail(s) 22,72. The deflector member 124 is attached to the first support plate 102 using fasteners 126, which in the embodiment shown is in the form of pins. The deflector member 124 is preferably rigid.

A vacuum manifold 128 is housed within the first support plate 100 such that inlets of the vacuum manifold 128 are facing inwards towards the region between the support plates 100,102. The vacuum manifold 128 may be manufactured using an additive manufacturing or 3-D printing printer. A hose is arranged to couple the vacuum manifold 128 to an inlet 80 of the vacuum cleaning system. This allows the vacuum cleaning system to, via the hose and vacuum manifold 128, directly extract lint, dust, dirt and/or debris removed from the overhead rail(s) 22,72 by the rotary cleaning brush 50, which provides for a more efficient vacuuming operation.

An idler wheel 130 is centrally mounted on an axle on the second support plate 100 between the two support wheels 112. A vertical position of the axle can be separately adjusted using fasteners. The idler wheel 130 is mounted opposite the rotary cleaning brush 50 so that the idler wheel 130 and rotary cleaning brush 50 are coaxial. As a result, in use, the idler wheel 130 and rotary cleaning brush 50 engage opposite sides of the overhead rail(s) 22,72. An inductive proximity sensor 132 is mounted on the second support plate 102 adjacent the idler wheel 130. An inductive proximity target 134 in the form of a metal pin is mounted on the idler wheel 130. It is envisaged that, in other embodiments of the invention, more than one inductive proximity targets may be used.

As the cleaning trolley 96 travels along the rail(s) 22,72, the idler wheel 130 rotates at a speed proportional to a linear speed of the cleaning trolley 96 along the rail(s) 22,72. Rotation of the idler wheel 130 causes the inductive proximity target 134 to move into and out of a sensing range of the inductive proximity sensor 132. This enables the inductive proximity sensor 132 to detect the rotations of the idler wheel 130. As described above, this information can be used to measure the linear speed of the cleaning trolley 96 along the rail(s) 22,72 in order to determine the state of motion (i.e. stationary or moving) of the cleaning apparatus 20 in order to decide whether to start, continue or stop the cleaning operation of the rotary cleaning brush 50 and/or the vacuuming operation of the vacuum cleaning system.

The cleaning apparatus 20 includes several mass saving features, such as the use of components manufactured using additive manufacturing or 3-D printing, flat DC motors, timing belts, lightweight trolley bodies, and lightweight batteries. These mass saving features advantageously allows the cleaning apparatus 20 to be designed for use with different rail systems having different load capacities. For example, in the commercial laundry industry, it is known to use one rail system to carry full laundry bags and another rail system to carry empty laundry bags, where the second rail system is designed to have a lower load capacity in order to reduce material cost. The mass saving features of the cleaning apparatus 20 allows it to be used to clean both of the rail systems for carrying full and empty laundry bags respectively. On the other hand, without the mass saving features, it would be more difficult to design a cleaning apparatus for use with the rail system for carrying empty laundry bags.

It will be appreciated that the specific embodiment shown in the figures is not intended to be limiting on the scope of the invention, and is merely chosen as an example to help illustrate the working of the invention. For example, the cleaning apparatus 20 may be used to separately clean a single-rail system and a multiple-rail system. It will be also appreciated that the specific embodiment shown in the figures is applicable mutatis mutandis to a cleaning apparatus including more than two cleaning devices, and is also applicable mutatis mutandis for a cleaning apparatus with cleaning devices including mounting members configured for mounting on a single rail and on separate rails.

It will be further appreciated that the use of the terms "first" and "second", and the like, in this patent specification is merely intended to help distinguish between similar features (e.g. the first and second cleaning devices, the first and second cleaning trolleys), and is not intended to indicate the relative importance of one feature over another feature, unless otherwise specified.

## Claims

1. A cleaning apparatus for cleaning a rail system, the cleaning apparatus comprising a plurality of cleaning devices, each cleaning device including a respective support member configured for engaging a rail so that the respective cleaning device is transportable along the rail, each cleaning device including a respective cleaning member for cleaning a rail, wherein each cleaning device is arranged to be movable between first and second positions to switch between first and second modes of the cleaning apparatus so that:
in the first mode of the cleaning apparatus, the cleaning devices are arranged in their respective first positions to align the respective support members for engaging a common rail so that the cleaning devices are transportable along the common rail, and
in the second mode of the cleaning apparatus, the cleaning devices are arranged in their respective second positions to align the respective support members for respective engagement with separate rails so that the cleaning devices are respectively transportable along the separate rails.

2. A cleaning apparatus according to Claim 1 wherein each support member is a suspension member configured for suspension from a rail so that the respective cleaning device is transportable along the rail, and each cleaning device is arranged to be movable between the first and second positions to switch between the first and second modes of the cleaning apparatus so that:
in the first mode of the cleaning apparatus, the cleaning devices are arranged in their respective first positions to align the respective suspension members for suspension from a common rail so that the cleaning devices are transportable along the common rail, and
in the second mode of the cleaning apparatus, the cleaning devices are arranged in their respective second positions to align the respective suspension members for respective suspension from separate rails so that the cleaning devices are respectively transportable along the separate rails.

3. A cleaning apparatus according to Claim 1 wherein each support member is a mounting member configured for mounting on a rail so that the respective cleaning device is transportable along the rail, and each cleaning device is arranged to be movable between the first and second positions to switch between the first and second modes of the cleaning apparatus so that:
in the first mode of the cleaning apparatus, the cleaning devices are arranged in their respective first positions to align the respective mounting members for mounting on a common rail so that the cleaning devices are transportable along the common rail, and
in the second mode of the cleaning apparatus, the cleaning devices are arranged in their respective second positions to align the respective mounting members for respective mounting on separate rails so that the cleaning devices are respectively transportable along the separate rails.

4. A cleaning apparatus according to any one of the preceding claims including an apparatus body, wherein each cleaning device is arranged to be movable relative to the apparatus body between the first and second positions to switch between the first and second modes of the cleaning apparatus, wherein each cleaning device is arranged to be pivotable between the first and second positions to switch between the first and second modes of the cleaning apparatus, wherein each cleaning device includes a respective flexible coupling member arranged to pivotally couple the respective cleaning device to the apparatus body.

5. A cleaning apparatus according to any one of the preceding claims including one or more load-bearing support members configured for engaging a rail so as to support the cleaning apparatus, wherein the or each load-bearing support member is separate from each cleaning device.

6. A cleaning apparatus according to any one of the preceding claims including a proximity sensor and a proximity target, the proximity target is configured to be movable into and out of a sensing range of the proximity sensor, and the proximity target is arranged so that, when the cleaning apparatus is transported along a rail, a rate of movement of the proximity target into and out of the sensing range of the proximity sensor corresponds to a speed at which the cleaning apparatus is transported along the rail.

7. A cleaning apparatus according to Claim 6 wherein the proximity sensor is an inductive proximity sensor.

8. A cleaning apparatus according to Claim 6 or Claim 7 wherein the proximity target is mounted on a rotary element which is configured for engaging a rail, and/or wherein at least one of the plurality of support members includes a proximity sensor and a proximity target.

9. A cleaning apparatus according to any one of Claims 6 to 8 further including a controller configured to receive a proximity measurement from the proximity sensor, wherein the controller is configured to selectively control a cleaning operation of each cleaning member in accordance with the received proximity measurement.

10. A cleaning apparatus according to any one of the preceding claims wherein each cleaning device includes a respective motor configured to selectively drive the corresponding cleaning member to perform a cleaning function.

11. A cleaning apparatus according to any one of the preceding claims including a vacuum cleaning system configured to selectively extract lint, dust, dirt and/or debris from the vicinity of the cleaning apparatus.

12. A cleaning apparatus according to Claim 11 when dependent from any one of Claims 6 to 9 further including a controller configured to receive a proximity measurement from the proximity sensor, wherein the controller is configured to selectively control a vacuuming operation of the vacuum cleaning system in accordance with the received proximity measurement.

13. A cleaning apparatus according to any one of the preceding claims wherein each cleaning device includes a respective deflector member arranged to, in use, deflect lint, dust, dirt and/or debris removed from a rail.

14. A cleaning apparatus according to any one of the preceding claims including one or more portable energy storage devices for powering one or more electrical components of the cleaning apparatus.

15. A cleaning apparatus for cleaning a rail system, the cleaning apparatus comprising a cleaning device, the cleaning device including a support member configured for engaging a rail so that the cleaning device is transportable along the rail, the cleaning device including a cleaning member for cleaning a rail, wherein the cleaning apparatus includes a proximity sensor and a proximity target, the proximity target is configured to be movable into and out of a sensing range of the proximity sensor, and the proximity target is arranged so that, when the cleaning apparatus is transported along a rail, a rate of movement of the proximity target into and out of the sensing range of the proximity sensor corresponds to a speed at which the cleaning apparatus is transported along the rail.
